(19) Europäisches Patentamt
European Patent Office
Office européen des brevets

(11) **EP 3 397 871 B1**

(12) **EUROPEAN PATENT SPECIFICATION**

(45) Date of publication and mention
of the grant of the patent:
**02.09.2020 Bulletin 2020/36**

(21) Application number: **16828754.8**

(22) Date of filing: **30.12.2016**

(51) Int Cl.:
***B32B 7/02*** *(2019.01)*

(86) International application number:
**PCT/EP2016/082927**

(87) International publication number:
**WO 2017/114952 (06.07.2017 Gazette 2017/27)**

(54) **CORROSION RESISTANT BUSHING INCLUDING METAL MESH**

KORROSSIONSBESTÄNDIGE BUCHSE MIT METALLISCHEN MASCHEN

DOUILLE RESISTANTE À LA CORROSION AVEC MAILLAGE METALLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2015 US 201562273634 P**

(43) Date of publication of application:
**07.11.2018 Bulletin 2018/45**

(73) Proprietor: **Saint-Gobain Performance Plastics
Pampus GmbH
47877 Willich (DE)**

(72) Inventor: **HARTMANN, Juergen
88138 Sigmarszell (DE)**

(74) Representative: **Zimmermann & Partner
Patentanwälte mbB
Postfach 330 920
80069 München (DE)**

(56) References cited:
**EP-A1- 2 316 707        EP-A1- 2 563 590
EP-A1- 2 930 252        EP-A2- 1 432 921
EP-A2- 2 372 179        DE-T5-112011 104 685
GB-A- 1 520 409         GB-A- 2 270 720
GB-A- 2 508 097         US-A1- 2011 049 834
US-A1- 2012 106 882**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This disclosure, in general, relates corrosion resistant bushings with a high load capability.

Sliding bearing composite materials consisting of a load bearing substrate and a sliding layer overlay are generally known. The load bearing substrate and the sliding layer are usually connected by laminating using a suitable adhesive. The sliding bearing composite materials can be used to form maintenance free bushing used, for example, by the automotive industry. These maintenance free bushings can be used for door, hood, and engine compartment hinges, seats, steering columns, flywheels, balancer shaft bearings, etc. Additionally, maintenance free bushings formed from the sliding bearing composite materials can also be used in non-automotive applications. In some applications, the sliding bearings are exposed to environmental conditions that lead to corrosion, especially when the load bearing substrate is made of iron alloys, such as steel. There is an ongoing need for improved maintenance free bushings that have a longer maintenance free lifetime and improved delamination resistance or corrosion resistance a high load capability. US2011/049834 discloses a corrosion resistant bushing.

SUMMARY

The present invention refers to the bushing according to independent claim 1, the hinge assembly according to independent claim 2, and the method of preparing a bushing according to independent claim 12. Further embodiments of the bushing of claim 1 and the hinge of claim 2 are described in dependent claims 3 to 11.

According to one aspect, a bushing comprises a porous metallic layer. The porous metallic layer is formed from a first and a second composition. The first composition includes iron. The second composition includes a metal having an electronegativity less than iron. The bushing further includes a sliding layer. The porous metallic layer has a porosity of at least 1% and not greater than 99%, and the porous metallic is selected from a mesh material, a grid, an expanded sheet, or a perforated sheet.

In a further aspect, a hinge assembly includes a first hinge portion and a second hinge portion. The hinge assembly further includes a pin, which joins the first and the second hinge portions. The hinge assembly further includes a bushing according to the above aspect.

According to a still further aspect, a method for preparing the above bushing is described. The method comprises: providing a metal wire or a metal sheet, each comprising iron; applying an metal-containing composition onto the metal wire or metal sheet to form a metal precursor; forming a mesh or an expanded sheet from the metal precursor so that a porous metallic layer is formed, wherein the porous metallic layer has a porosity of at least 1% and not greater than 99%; applying a sliding layer onto the mesh or expanded sheet to form a stack, calendaring the stack to form a laminate; cutting a blank from the laminate; and forming a semi-finished bushing from the blank, wherein the metal-containing composition comprises a metal having an electronegativity less than iron.

BRIEF DESCRIPTION OF THE DRAWINGS

The present disclosure may be better understood, and its numerous features and advantages made apparent to those skilled in the art by referencing the accompanying drawings.

FIGs. 1A through ID are illustrations of the layer structure of exemplary corrosion resistant bushings.
FIGs. 2A and 2B is an illustration and detail of an exemplary hinge.
FIGs. 3A and 3B are illustrations of SEM scans.
FIG. 4 illustrates various embodiments of bushing applications.
FIG. 5 illustrates a wire comprising a core metal and a coating.
FIG. 6 illustrates a laminate for an exemplary corrosion resistant bushing.
FIG. 7 illustrates a stretch metal for an corrosion resistant bushing.

The use of the same reference symbols in different drawings indicates similar or identical items.

DETAILED DESCRIPTION OF THE PREFERRED EMBODIMENT(S)

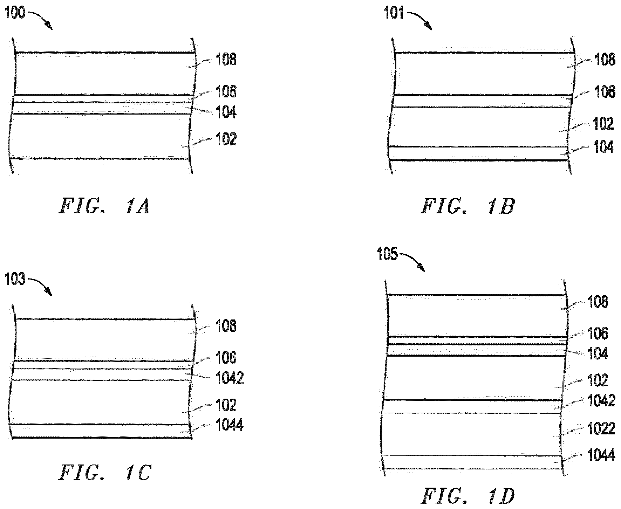

FIG. 1A shows a cross section illustrating the various layers of the corrosion resistant bushing, generally designated 100. Bushing 100 can include a load bearing substrate 102. The load bearing substrate 102 is a metallic support layer that is able to cope with high strain or high pressure. The load bearing substrate 102 can be susceptible to corrosion. The metallic support layer 102 can include a metal or metal alloy such as steel including carbon steel, spring steel, and the like, iron, or any combination thereof. In a particular embodiment, the load bearing substrate 102 can be a metal (including metal alloys), such as ferrous alloys. In one further embodiment, the load bearing substrate 102 is selected from an iron-containing substrate, a tin-containing substrate, a copper-containing substrate, a titanium-containing substrate, or any combination thereof. The load bearing substrate 102 is coated with a corrosion protection layer 104. The corrosion protection layer 104 can include aluminum or an aluminum alloy.

The load bearing substrate 102 has a thickness $t_1$. In an embodiment, $t_1$ is at least 50 microns, at least 80 microns, at least 100 microns, at least 150 microns, at least 200 microns, or at least 300 microns. In another embodiment, $t_1$ is not greater than 800 microns, not greater than 700 microns, not greater than 650 microns, not greater than 600 microns, not greater than 550 microns, not greater than 500 microns, not greater than 480 microns, not greater than 460 microns, not greater than 440 microns, or not greater than 420 microns. In yet one further embodiment, $t_1$ ranges from 50 microns to 800 microns, such as from 100 microns to 600 microns, from 200 microns to 500 microns, or from 300 microns to 450 microns. In one particular embodiment, $t_1$ ranges from 380 microns to 420 microns.

The load bearing substrate is highly resilient to mechanical forces. In one embodiment, the load bearing substrate has a tensile strength of at least 120 MPa, at least 140 MPa, 160 MPa, at least 180 MPa, at least 200 MPa, at least 220 MPa, or at least 240 MPa. In yet one further embodiment, the load bearing substrate has a tensile strength of not greater than 600 MPa, not greater than 500 MPa, not greater than 450 MPa, not greater than 400 MPa, not greater than 350 MPa, not greater than 300 MPa, or not greater than 250 MPa. In another embodiment, the load bearing substrate has a yield strength in a range from 100 MPa to 2000 MPa, in a range from 150 MPa to 1500 MPa, in a range from 200 MPa to 1000 MPa, or in a range from 200 MPa to 600 MPa.

Load bearing substrates as described above often have a susceptibility to corrosion. Corrosion susceptibility can be tested according to neutral salt spray test ISO 9227:2006. In the absence of any corrosion protection, load bearing substrates that include iron, such as steel show red corrosion after 5 hrs of salt spraying.

The metal containing layer 104 has a thickness $t_2$. In one embodiment, $t_2$ can be at least 20 microns, at least 25 microns, at least 30 microns, at least 35 microns, at least 40 microns, at least 45 microns, or at least 50 microns. In another embodiment, $t_2$ is not greater than 200 microns, not greater than 180 microns, not greater than 160 microns, not greater than 140 microns, not greater than 120 microns, not greater than 100 microns, not greater than 90 microns, not greater than 80 microns, not greater than 70 microns, or not greater than 60 microns. In yet one further embodiment, $t_2$ is in a range from 20 microns to 200 microns, in a range from 25 microns to 180 microns, in a range from 30 microns to 120 microns, or in a range from 40 microns to 80 microns. In one particular embodiment, $t_2$ is between 45 microns and 50 microns.

In one embodiment, the metal containing layer has a tensile strength of at least 50 MPa, at least 55 MPa, 60 MPa, at least 65 MPa, at least 70 MPa, at least 75 MPa, or at least 80 MPa. In another embodiment, the metal containing layer has a tensile strength of not greater than 200 MPa, not greater than 190 MPa, not greater than 180 MPa, not greater than 160 MPa, not greater than 150 MPa, not greater than 140 MPa, not greater than 130 MPa, not greater than 120 MPa, not greater than 110 MPa, or not greater than 100 MPa.

Addressing the aluminum content of the metal containing layer, in one embodiment, the metal containing layer has an aluminum content at least 20 wt%, at least 30 wt%, at least 40 wt%, at least 50 wt%, at least 60 wt%, at least 70 wt%, at least 75 wt%, at least 80 wt%, at least 85 wt%, or at least 90 wt%. In another embodiment, the aluminum content is not greater than 99.99999 wt%, not greater than 99.99 wt%, not greater than 99.95 wt%, not greater than 99.9 wt%, not greater than 99.85 wt%, not greater than 99.8 wt%, not greater than 99.5 wt%, not greater than 99 wt%, not greater than 98 wt%, not greater than 95 wt%, not greater than 93 wt%, not greater than 85 wt%, not greater than 80 wt%, not greater than 70 wt%, or not greater than 60 wt%. In one embodiment, the metal containing layer has an aluminum content in a range from 25 wt% to 99.99999 wt%, in a range from 50 wt% to 99.99 wt%, in a range from 90 wt% to 99.99 wt%, or in a range from 95 wt% to 99.9 wt%.

As discussed above, the metal containing layer can have an aluminum content that is not the majority component. Thus, the aluminum content can be not greater than 50 wt%, not greater than 45 wt%, not greater than 40 wt%, not greater than 35 wt%, not greater than 30 wt%, or not greater than 25 wt%. For example, in one embodiment, the metal containing layer can contain another metal selected from the group of lithium, beryllium, sodium, magnesium, scandium, titanium, vanadium, chromium, manganese, iron, cobalt, nickel, copper, silicon, and zinc. In one particular embodiment, the metal containing layer includes an aluminum magnesium alloy, such as $Al_xMg_y$, wherein x is selected from 0.1, 0.2, 0.25, 0.33, 0.5, and x+y=1.

In yet another embodiment the metal containing layer can be replaced by a coating. The coating can include an elemental metal that has a Pauling electronegativity of less than the Pauling electronegativity of iron. In one embodiment, the elemental metal may have a Pauling electronegativity of less than 1.83. In another embodiment, the elemental metal can be selected from beryllium, magnesium, lithium, sodium, scandium, titanium, vanadium, chromium, manganese, zinc, aluminum, or any combination or alloys thereof. In another embodiment, the elemental metal is selected from magnesium, aluminum, zinc, an alloy comprising magnesium, aluminum, or zinc, or any combination thereof.

In yet one further embodiment, the metal containing layer has a structured surface. For example, the metal containing layer has a structured surface comprising wall-like depressions, wall-like elevations, or any combination thereof. The wall-like depressions or wall-like elevations can have a height in a range of 0.1 microns to 30 microns, in a range of 1 micron to 20 microns, or 2 microns to 15 microns. In one embodiment, the structured surface can include regular polygon patterns, such as triangular patterns, rectangular patterns, square patterns, pentagon patterns, hexagon patterns, higher polygon patterns, and combination thereof. The patterns can be depressions into the aluminum layer, elevations from the aluminum layer, or combination thereof. In one particular embodiment, the metal containing layer has a honeycomb structured surface. In one further embodiment, the surface structures can have irregular patterns. In yet another embodiment, the metal containing layer has a surface roughness of at least 1 micron, at least 2 microns, at least 3 microns, at least 4 microns, or at least 5 microns. In another embodiment, the metal containing layer has a surface roughness of not greater than 20 microns, not greater than 15 microns, not greater than 12 microns, not greater than 10 microns, or not greater than 8 microns.

In order to obtain maximum corrosion resistance a minimum ratio of $t_2/t_1$ is necessary. In one embodiment, the ration of $t_2/t_1$ is at least 1/10. In order to maintain the tensile strength of the load bearing substrate 102, the ratio $t_1/t_2$ needs to remain below a maximum. In one embodiment, the ratio of $t_2/t_1$ is not greater than 1/3, not greater than ¼, not greater than 1/5, not greater than 1/6, not greater than 1/7, not greater than 1/8, or not greater than 1/9. In yet one further embodiment, the ratio of $t_2/t_1$ is in a range from 1/10 to ¼, in a range from 1/10 to 1/5, or in a range from 1/9 to 1/7.

In one further embodiment, layer 104 is a corrosion prevention layer. The corrosion prevention layer can include a metal selected from magnesium, aluminum, titanium, scandium, zinc, or any combination thereof. In one embodiment, the corrosion prevention layer consists essentially of the metal. In another embodiment, the corrosion prevention layer is substantially free of iron. In one further embodiment, the corrosion prevention layer consists essentially of magnesium. The corrosion prevention layer can consists essentially of a metal having an electronegativity of less than 1.70.

The corrosion prevention layer can have a thickness between 20 and 300 microns. In another embodiment, the corrosion prevention layer can have a thickness ratio to the loadbearing substrate as outlined and described herein.

A sliding layer 108 can be applied to the metal containing layer 104 with an adhesive layer 106. The sliding layer 108 can include a polymer, such as a fluoropolymer. Examples of polymers that can be used in sliding layer 108 include polytetrafluoroethylene (PTFE), fluorinated ethylene-propylene (FEP), polyvinylidenfluoride (PVDF), polychlorotrifluoroethylene (PCTFE), ethylene chlorotrifluoroethylene (ECTFE), perfluoroalkoxypolymer (PFA), polyacetal (POM), polybutylene terephthalate (PBT), polyimide (PI), polyamidimide (PAI), polyetherimide, polyetheretherketone (PEEK), polyethylene, such as ultrahigh molecular weight polyethylene (UHMWPE), polysulfone, polyamide, polyphenylene oxide, polyphenylene sulfide (PPS), polyurethane, polyester, or any combination thereof.

Additionally, the sliding layer 108 can include fillers, such as a friction reducing filler. Examples of fillers that can be used in the sliding layer 108 include glass, glass fibers, carbon, carbon fibers, silicon, graphite, PEEK, molybdenum disulfide, aromatic polyester, carbon particles, bronze, fluoropolymer, thermoplastic fillers, silicon carbide, aluminum oxide, polyamidimide (PAI), polyimide (PI), PPS, polyphenylene sulfone (PPSO2), liquid crystal polymers (LCP), aromatic polyesters (Econol), and mineral particles such as wollastonite, $CaF_2$, and barium sulfate, or any combination thereof. Fillers can be in the form of beads, fibers, powder, mesh, fleece, or any combination thereof.

Addressing the thickness of the sliding layer, in one embodiment, the sliding layer has a thickness of at least about 0.05 mm, such as at least about 0.1 mm, at least about 0.15 mm, at least about 0.2 mm, at least about 0.25 mm, at least about 0.3 mm, at least about 0.35 mm, at least about 0.4 mm, or at least about 0.45 mm. In another embodiment, the sliding layer has a thickness of not greater than about 2 mm, such as not greater than about 1.5 mm, not greater than about 1 mm, not greater than about 0.9 mm, not greater than about 0.8 mm, not greater than about 0.7 mm, not greater than about 0.6 mm, not greater than about 0.55 mm, or not greater than about 0.5 mm. In one embodiment, the sliding layer has a thickness in a range between 0.05 mm and 2 mm, in a range between 0.2 mm and 1 mm, or in a range between 0.3 mm and 0.7 mm.

In addressing the tensile strength of the loadbearing substrate and the metal containing layer, in one embodiment, the combined tensile strength of the load bearing substrate and the metal containing is at least 70% of the tensile strength of the load bearing substrate, at least 75% of the tensile strength of the load bearing substrate, at least 80% of the tensile strength of the load bearing substrate, at least 80% of the tensile strength of the load bearing substrate, at least 85% of the tensile strength of the load bearing substrate, at least 90% of the tensile strength of the load bearing substrate, at least 95% of the tensile strength of the load bearing substrate, at least 98% of the tensile strength of the load bearing substrate, at least 99% of the tensile strength of the load bearing substrate, at least 99.9% of the tensile strength of the load bearing substrate, or at least 99.99% of the tensile strength of the load bearing substrate.

In an embodiment, the sliding layer 108 may include a woven mesh or an expanded metal grid. The woven mesh or expanded metal grid can include a metal or metal alloy such as aluminum, steel, stainless steel, bronze, or the like. Alternatively, the woven mesh can be a woven polymer mesh. In an alternate embodiment, the sliding layer may not include a mesh or grid. In another alternate embodiment, the woven mesh, a fleece or expanded metal grid may be embedded between adhesive layers 106 and sliding layer 108.

In one embodiment, the expanded metal layer has a mesh size of at least 10 mesh/inch, such as at least 11 mesh/inch, at least 13 mesh/inch, at least 15 mesh/inch, at least 17 mesh/inch, at least 19 mesh/inch, or at least 21 mesh/inch. In another embodiment, the expanded metal layer has a thickness of at least 0.1 mm, such as at least 0.2 mm, at least 0.3 mm, at least 0.4 mm, at least 0.5 mm, or at least 0.6 mm. In yet another embodiment, the expanded metal layer has a thickness of not greater than 1 mm, not greater than 0.9 mm, not greater than 0.8 mm, not greater than 0.7 mm, not greater than 0.6 mm, not greater than 0.55 mm, or not greater than 0.5 mm.

Returning to FIG. 1, adhesive layer 106 can be a hot melt adhesive. Examples of adhesive that can be used in adhesive layer 106 include fluoropolymers, an epoxy resins, a polyimide resins, a polyether/polyamide copolymers, ethylene vinyl acetates, Ethylene tetrafluoroethylene (ETFE), ETFE copolymer, perfluoroalkoxy (PFA), or any combination thereof. Additionally, the adhesive layer 106 can include at least one functional group selected from -C=O, -C-O-R, -COH, -COOH, -COOR, -$CF_2$=CF-OR, or any combination thereof, where R is a cyclic or linear organic group containing between 1 and 20 carbon atoms. Additionally, the adhesive layer 106 can include a copolymer. In an embodiment, the hot melt adhesive can have a melting temperature of not greater than about 250°C, such as not greater than about 220°C. In another embodiment, the adhesive layer 112 may break down above about 200°C, such as above about 220°C. In further embodiments, the melting temperature of the hot melt adhesive can be higher than 250°C, even higher than 300°C.

Referring to FIG. 1B, in another embodiment, the metal containing layer 104 is located adjacent to the loadbearing substrate and opposite to the sliding layer 108. In those embodiments, the metal containing layer serves as a corrosion resistant layer or a passivation layer. In an assembly, the metal containing layer 104 as shown in FIG. 1B contacts another metal part. Layer 104 acts as a sacrificial anode to protect the assembly from corrosion.

Referring to FIG. 1C, another embodiment includes the presence of two metal containing layers 1042 and 1044 adjacent to the loadbearing substrate overlying opposite surfaces of the loadbearing substrate 102. In this embodiment, layer 1042 can have a thickness $t_2$ and layer 1044 can have a thickness $t_3$. Layers 1042 and 1044 can be the same or differ in thickness, aluminum content, or surface structure.

With respect to FIG. 1C, a ratio of $(t_2+t_3)/t_1$ is at least 1/10. In another embodiment, the ratio of $(t_2+t_3)/t_1$ is not greater than 1/3, not greater than 2/7, not greater than 1/4, not greater than 2/9, or not greater than 1/5. In yet another embodiment, the ratio of $(t_2+t_3)/t_1$ is in a range from 1/10 to 1/3, in a range from 1/8 to 1/3, or in a range from 1/5 to 1/3.

Referring to FIG. ID, in another embodiment, a load bearing substrate can include load bearing metal layers 102 and 1022, which can be the same or different in metal type, thickness, and composition. The loadbearing substrate can include metal containing layers 104, 1042, and 1044, which, as well, can be the same or differ in thickness, aluminum content, and surface structure.

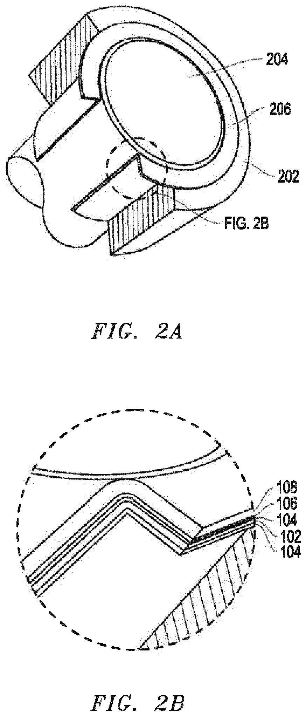

Laminates as shown in FIGs 1A-1D find applications as bushings. One example of such bushing is illustrated in FIGs. 2A and 2B. Referring to FIG. 2A, an assembly includes an outer component 202 and an inner component 204 and a bushing 206 placed between components 202 and 204. The bushing can have flange extending radially outward and overlying the outer component. For illustrative purpose, FIG. 2A discloses only a section of the bushing 206. In embodiments, the bushing 206 can form a closed cylinder. In another embodiment, the bushing 206 can be a cylinder including a slit that extends from the first axial end to the second axial end.

FIG. 2B discloses a detail of bushing 206, showing all the layers discussed herein with two metal containing layers 104 sandwiching, loadbearing substrate 102. In any embodiment, the bushing 206 has an edge that is exposed to the environment.

In one embodiment, the bushing can further include a functional layer adjacent to the loadbearing substrate opposite to the sliding layer. In one embodiment, the functional layer can be an additional sliding layer, an elastomeric layer, or a combination thereof. For the functional layer being an elastomeric layer, the elastomeric layer can include nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoro elastomer.

For the elastomeric layer, the firm bond between the support material and elastic layer can be produced by means of a vulcanization process at a temperature of about 150-250°C. Here, crosslinking can occur within the elastomer and with the surface of the support material which has been activated by the bonding agent. The bonding layer which is thus present between support material and elastic layer can comprise at least one reactive polymer, in particular a polymer based on silane, and/or pigments in a solvent, in particular in methyl isobutyl ketone, in xylene, in ethanol and water or in ethanol and methyl ethyl ketone.

Turning to the method of forming the bushing, the sliding layer can be glued to the load bearing substrate using a melt adhesive to form a laminate sheet. The laminate sheet can be cut into strips or blanks that can be formed into the bushing. Cutting the laminate sheet can create cut edges including an exposed portion of the load bearing substrate. The blanks can be formed into the bushing, such as by rolling and flanging the laminate to form a semi-finished bushing of a desired shape.

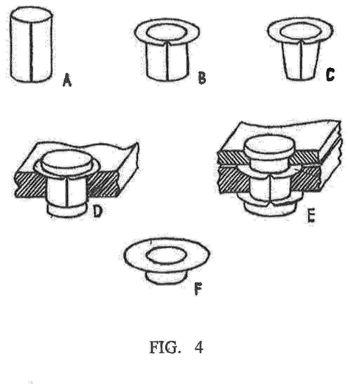

Fig. 4 depicts exemplary shapes or applications of the bushing. For example, the bushing can be a plain cylinder (4A), or include a flange (4B). In another embodiment, the bushing can be conical with a flange (4C) or without a flange (not shown). Embodiment 4D depicts a bushing with an inner element and an outer element. Embodiment 4E depicts a bushing with an inner element separated from a first outer element by the bushing but in contact with a second outer element adjacent to the first outer element; a bushing flange separates the first and second outer elements. For example, door hinges can fall into the scope of embodiment 4E. Embodiment 4F shows a flanged bushing lacking a slit, which is usually present after shaping.

In an embodiment, the bearing with such a corrosion resistant coating can have a significantly increased lifetime, and in particular, the bearing can have a Corrosion Resistance Rating according to neutral salt spray test ISO 9227:2006. of at least 300 hours, at least 400 hours, at least 500 hours, at least 600 hours, at least 700 hours, at least 800 hours, at least 900 hours, at least 1000 hours, or at least 1100 hours. In another embodiment, the bushing has a corrosion resistance rating of not greater than 2000 hours, not greater than 1800 hours, not greater than 1600 hours, or not greater than 1500 hours.

Another feature of the bushings is the sizing capability of finished bushings. Sizing capacity is amount of plastic deformation the laminate of a bushing can undergo. Sizing capability is expressed in percentage decrease of wall thickness after a bushing has been deformed by an oversized pin. That is:

$$SC=(t_0-t_a)/t_0 \ ,$$

wherein SC is sizing capability, $t_0$ is the original thickness of the laminate and $t_a$ is the thickness after deformation by an oversized pin. Sizing capacity can be measured by stepwise deforming the bushing with an oversized pin. For example, a bushing can be deformed by 5% with a first pin and additional up to 5% with a second oversized pin, and up to 5% for each additional oversized pin.

In one embodiment, the bushing has sizing capability of at least 3%, at least 4%, at least 5%, at least 6%, at least 7%, at least 8%, at least 9%, at least 10%, at least 12%, at least 14%, at least 16%, or at least 18%.

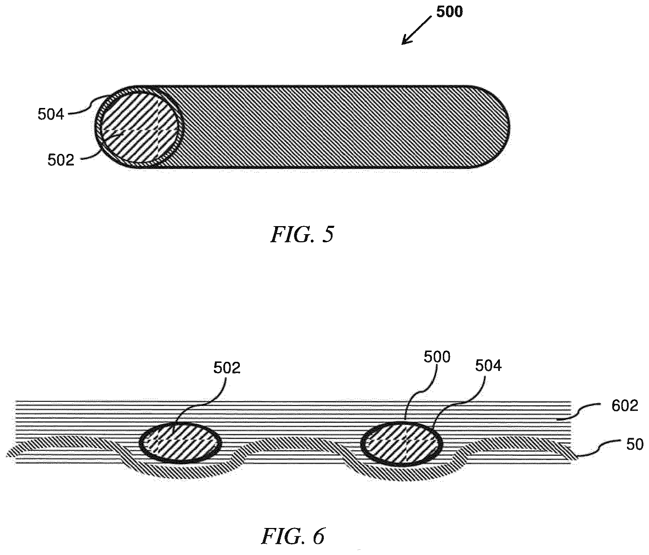

FIG. 5 depicts a wire 500. The wire has a core 502 of a metal comprising iron. In one embodiment, the core 502 can include iron, an iron alloy, or a combination thereof. In another embodiment, core 502 is steel. The wire 500 further includes a coating 504 substantially covering core 502. In one embodiment the coating 504 includes a metal that may have a Pauling Electronegativity of less then iron. In one embodiment, the coating can include a lacquer including metal particles of a metal with a Pauling Electronegativity less than iron. In another embodiment, the coating can include a metal foil. The coating is in direct contact with the core. In one embodiment, the coating can be applied to the core via deposition, such as chemical or physical vapor deposition, or electrochemical deposition (galvanizing). The coating can have a thickness $t_c$ that relates to the diameter $d_w$ of the wire 500. In one embodiment, $t_c/d_w$ is at least 0.001, such as at least 0.005, at least 0.01, at least 0.02, at least 0.05, at least 0.07, at least 0.1, at least 0.15, or at least 0.2. In another embodiment $t_c/d_w$ is not greater than 0.5, not greater than 0.45, not greater than 0.4, not greater than 0.35, not greater than 0.3, not greater than 0.25, or not greater than 0.2. In one embodiment, $t_c/d_w$ ranges from 0.001 to 0.25, such as from 0.005 to 0.2, or 0.01 to 0.15.

FIG. 6 depicts an exemplary laminate comprising a mesh made of wire 500. In one embodiment, the mesh can include warps and wefts made of wire 500, as depicted in FIG. 6. In other embodiments (not shown), the mesh can include wire 500 as wefts only while warp wires can include a different wire. That different wire can be made of steel only to allow higher loading capacity of the laminate. In another embodiment, the different wire can have a higher aluminum content to improve corrosion resistance. The wire 500 includes coating 504 and core 502 as described herein. The laminate further includes a sliding layer 602. Sliding layer can include the same material as described for layer 108 in FIG. 1. The mesh of wires 500 can be completely embedded in sliding layer 602 (not shown). In another embodiment, as shown in FIG. 6, the mesh can only be partly embedded in the sliding layer. Moreover, the sliding layer 602 can be affixed to the mesh of wires 500 via an adhesive layer (not shown) similar to layer 106 of FIG. 1. In one further embodiment, as shown in FIG. 6, the laminate is free of any continuous support layer. In one embodiment, the laminate consists essentially of the metal mesh, an adhesive layer, and a sliding layer. In another embodiment, the laminate consists essentially of the metal mesh and the sliding layer.

Further to the aspects of the present invention, the mesh made out of wires 500 is exemplary to the porous metallic layer. In other embodiments, the mesh can be replaced with any porous metallic layer such as a non-woven metal felt, a metal foam, or stretch metal. Each of the porous metallic layer may include an iron containing phase and a phase containing a metal having a Pauling Electronegativity that is less than the Pauling Electronegativity of iron. In one embodiment, the iron containing phase is steel. In another embodiment the second phase is metal containing. In one embodiment, the two metallic phases are heterogeneous.

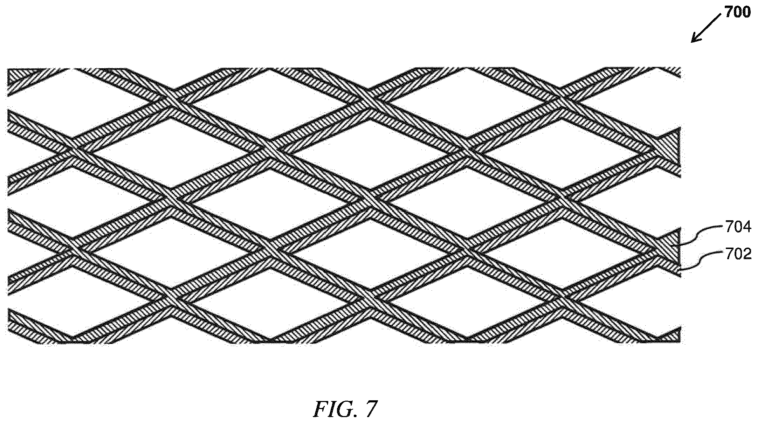

FIG. 7 depicts another example of a porous metallic layer, namely an expanded or stretch metal layer. The expanded metal layer includes a coating 704 overlying the metal sheet 702. In another embodiment (not shown in FIG. 7), the coating 704 does not cover the major surface of the metal sheet but lines the opening of the diamond-shaped openings. In yet another embodiment, the coating can partly cover the major surface of the metal sheet and partly the surface of the diamond-shaped openings. In yet one further embodiment, the coating 704 can cover both major surfaces of the stretch metal sheet. The stretch metal sheet 700 can be prepared from a solid metal sheet, such as a steel sheet, onto which a coating of a second metal of lesser electronegativity, such as aluminum is cladded on.

The present disclosure specifically refers to the following examples:

Example 1: A bushing comprising: a porous metallic layer, the porous metallic layer formed by a first composition and a second composition, the first composition comprising iron, the second composition comprising a metal having an electronegativity less than iron, and a sliding layer overlying the porous metallic layer, wherein the porous metallic layer has a porosity of at least 1% and not greater than 99%, and wherein the porous metallic is selected from a mesh material, a grid, an expanded sheet, or a perforated sheet.

Example 2: A hinge assembly comprising: a first hinge portion and a second hinge portion; a pin joining the first hinge portion with the second hinge portion; and a bushing according to embodiment 1.

Example 3: The bushing or hinge assembly according to any one of Embodiments 1 or 2, wherein the porous metallic layer has a porosity of at least 1%, at least 5%, at least 10%, at least 15%, at least 20%, or at least 25%.

Example 4: The bushing or hinge assembly according to any one of embodiments 1 or 2, wherein the porous metallic layer has a porosity of not greater than 99%, not greater than 95%, not greater than 90%, not greater than 85%, not greater than 80%, or not greater than 75%.

Example 5: The bushing or hinge assembly according to any one of embodiments 1 or 2, wherein the first composition includes steel.

Example 6: The bushing or hinge assembly according to any one of embodiments 1 or 2, wherein the second composition includes aluminum, magnesium, zinc, or an alloy thereof.

Example 7: The bushing or hinge assembly according to any one of embodiments 1 or 2, wherein the second composition is not greater than 10 wt%, not greater than 8 wt%, not greater than 6 wt%, not greater than 4 wt%, not greater than 2 wt%, not greater than 1.5 wt%, not greater than 1 wt%, not greater than 0.8 wt%, not greater than 0.6 wt%, or not greater than 0.3 wt% of the porous metallic layer.

8: The bushing or hinge assembly according to any one of embodiments 1 or 2, wherein the sliding layer comprises a fluoroploymer.

Example 9: The bushing or hinge assembly according to any one of embodiments 1 or 2, wherein the sliding layer comprises a polytetrafluoroethylene (PTFE), a polyamide (PA), a polyether ether ketone (PEEK), a polyimide (PI), a polyamideimide (PAI), a polyphenylene sulfide (PPS), a polyphenylene sulphone (PPSO2), a liquid crystal polymer (LCP), perfluoroalkoxypolymer (PFA), polyoxymethylene (POM), polyethylene (PE), UHMWPE, or a mixture thereof.

Example 10: The bushing or hinge assembly according to any one of embodiments 1 or 2, wherein the sliding layer comprises a polytetrafluoroethylene compound layer.

Example 11: The bushing or hinge assembly according to any one of embodiments 1 or 2, wherein the sliding layer consists essentially of a polytetrafluoroethylene compound layer.

Example 12: The bushing or hinge assembly according to any one of embodiments 1 or 2, wherein the sliding layer has a thickness of at least about 0.05 mm, such as at least about 0.1 mm, at least about 0.15 mm, at least about 0.2 mm, at least about 0.25 mm, at least about 0.3 mm, at least about 0.35 mm, at least about 0.4 mm, or at least about 0.45 mm.

Example 13: The bushing or hinge assembly according to any one of embodiments 1 or 2, wherein the sliding layer has a thickness of not greater than about 5 mm, not greater than about 4 mm, not greater than about 3 mm, not greater than about 2.5 mm, not greater than about 2 mm, such as not greater than about 1.5 mm, not greater than about 1 mm, not greater than about 0.9 mm, not greater than about 0.8 mm, not greater than about 0.7 mm, not greater than about 0.6 mm, not greater than about 0.55 mm, or not greater than about 0.5 mm.

Example 14: The bushing or hinge assembly according to any one of embodiments 1 or 2, wherein the sliding layer has a thickness in a range between 0.05 mm and 5 mm, in a range between 0.2 mm and 2 mm , or in a range between 0.3 mm and 1 mm.

Example 15: The bushing or hinge assembly according to any one of embodiments 1 or 2, wherein the porous metallic layer is embedded in the sliding layer.

Example 16: The bushing or hinge assembly according to any one of embodiments 1 or 2, wherein the bushing has a corrosion resistance rating according to neutral salt spray test ISO 9227:2006, of at least 300 hours, at least 400 hours, at least 500 hours, at least 600 hours, at least 700 hours, at least 800 hours, at least 900 hours, at least 1000 hours, or at least 1100 hours.

Example 17: The bushing or hinge assembly according to any one of embodiments 1 or 2, wherein the bushing has a corrosion resistance rating of not greater than 1 million hours, not greater than 100 000 hours, or not greater than 10000 hours.

Example 18: The bushing or hinge assembly according to any one of embodiments 1 or 2, wherein the bushing has sizing capability of at least 3%, at least 4%, at least 5%, at least 6%, at least 7%, at least 8%, at least 10%, at least 12%, at least 14%, at least 16%, or at least 18%.

Example 19: A method of preparing a bushing according to claim 1, the method comprising: providing a metal wire or a metal sheet, each comprising iron; applying a metal-containing composition onto the metal wire or metal sheet to form a metal precursor; forming a mesh or an expanded sheet from the metal precursor so that a porous metallic layer is formed, wherein the porous metallic layer has a porosity of at least 1% and not greater than 99%; applying a sliding layer onto the mesh or expanded sheet to form a stack; calendaring the stack to form a laminate; cutting a blank from the laminate; and forming a semi-finished bushing from the blank, wherein the metal-containing composition comprises a metal having an electronegativity less than iron.

Example 20: The method according to embodiment 19, wherein the applying an metal containing composition includes cladding, spray coating, metal spraying, mechanical coating, galvanic coating, hot-dipping, or any combination thereof

Further examples A Corrosion Resistance Rating is determined according to neutral salt spray test ISO 9227:2006. Samples are stored at room temperature for 24 hours prior testing. Samples are set on PVC racks or hung from a nylon thread and placed in to a salt spray chamber. At least 5 samples per variation of bushings are tested per salt spray test. A visual examination of the samples occurs in certain intervals.

For example, Sample 1 is prepared by cutting a blank from a laminate comprising 0.25 mm PTFE compound tape, 0.03 mm ETFE adhesive, and a substrate comprising 0.47 mm double side aluminum-cladded steel, wherein each aluminum layer is 20 microns. Sample 1 is prepared by cutting a blank from a laminate comprising 0.25 mm PTFE compound tape, 0.03 mm ETFE adhesive, and a substrate comprising 0.45 mm double side aluminum-cladded steel, wherein each aluminum layer is 50 microns. Accordingly, the difference between Sample 1 and Sample 2 is the thickness of the aluminum layers.

The samples are shaped to form the semi-finished bushing. The blank is shaped by rolling and flanging to obtain the desired shape. The Corrosion Resistance Rating of Sample 1 was determined to be less than 300 hours, i.e. red corrosion was observed at 300 hours. The Corrosion Resistance Rating of Sample 2 was determined to be at least 1000 hours, i.e. no observation of red corrosion at 1000 hours, and no red rust observation after 1500 hours and 3000 hours.

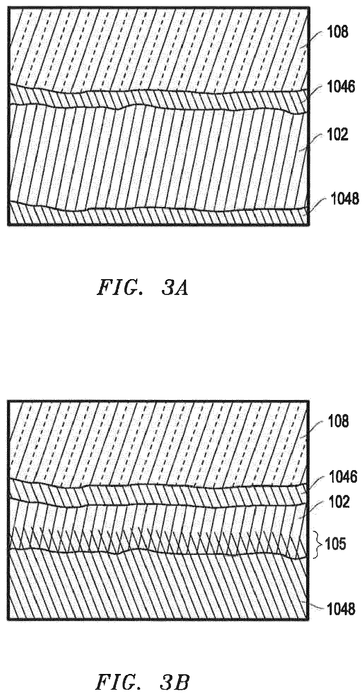

FIGs 3A and 3B depicts line diagrams of Scanning Electron Microscope scans (SEM) with an energy dispersive X-ray spectroscopy detector (EDS) of Sample 2 of an edge before and after the shaping. In FIG 3A, layers 1048 and 1046 are the 50 microns aluminum layers cladded onto steel layer 102. Sliding layer 108 is a PTFE tape and the adhesive layer between 108 and 1046 cannot be distinguished by EDS analysis. As can be seen after the shaping the substrate 102 is covered by aluminum from layer 1048 as a result of the shaping process. The coverage does not extend across the entire cross area of layer 102. In fact there is a transitional area 105 that shows the presence of iron and aluminum.

For Sizing capacity testing, three bushings having a wall thickness of 1mm. Bushing 1 was a standard SM material (SM100CG, available from Saint-Gobain Performance Plastics) with a 0.5mm double side aluminum-cladded steel, wherein each aluminum layer is 50 microns, Bushing 2 was an SM 100CG bushing further including a 0.4 mm expanded aluminum (99.5) mesh in the sliding layer, and Bushing 3 was an SM 100CG bushing further including an 0.4 mm expanded aluminum magnesium alloy ($AlMg_3$) mesh in the sliding layer.

Sizing capacity was determined by the amount of deformation upon insertion of a series of 5 oversized pins having an oversize over the inner diameter of the bushing ranging from 0.02mm to 0.22 mm. The inner diameter of the three bushings was 15 mm. Table 1 depicts the resulting size capabilities (plastic deformation)

Table 1

| Pin | 1 | 2 | 3 | 4 | 5 |
|---|---|---|---|---|---|
| Bushing 1 | 9.5% | 11% | 12.5% | 15% | N/A |
| Bushing 2 | 7.5% | 8.5% | 11.5% | 13% | 16% |
| Bushing 3 | 10% | 12.5% | 14.5% | 16% | 18% |

**Claims**

1. A bushing comprising:

   a porous metallic layer, the porous metallic layer formed by a first composition and a second composition, the first composition comprising iron, the second composition comprising a metal having an electronegativity less than iron, and a sliding layer overlying the porous metallic layer, wherein the porous metallic layer has a porosity of at least 1% and not greater than 99%, and wherein the porous metallic is selected from a mesh material, a grid, an expanded sheet, or a perforated sheet.

2. A hinge assembly comprising:

a first hinge portion and a second hinge portion;
a pin joining the first hinge portion with the second hinge portion; and
a bushing according to claim 1.

3. The bushing or hinge assembly according to any one of claims 1 and 2, wherein the first composition includes steel.

4. The bushing or hinge assembly according to any one of claims 1 and 2, wherein the second composition includes aluminum, magnesium, zinc, or an alloy thereof.

5. The bushing or hinge assembly according to any one of claims 1 and 2, wherein the second composition is not greater than 10 wt% of the porous metallic layer.

6. The bushing or hinge assembly according to any one of the preceding claims, wherein the sliding layer comprises a fluoropolymer.

7. The bushing or hinge assembly according to any one of claims 1 to 5, wherein the sliding layer comprises a polytetrafluoroethylene (PTFE), a polyamide (PA), a polyether ether ketone (PEEK), a polyimide (PI), a polyamideimide (PAI), a polyphenylene sulfide (PPS), a polyphenylene sulphone (PPSO2), a liquid crystal polymer (LCP), perfluoroalkoxypolymer (PFA), polyoxymethylene (POM), polyethylene (PE), UHMWPE, or a mixture thereof.

8. The bushing or hinge assembly according to any one of the preceding claims, wherein the sliding layer has a thickness of at least about 0.05 mm.

9. The bushing or hinge assembly according to any one of the preceding claims, wherein the sliding layer has a thickness of not greater than about 5 mm.

10. The bushing or hinge assembly according to any one of the preceding claims, wherein the porous metallic layer is embedded in the sliding layer.

11. The bushing or hinge assembly according to any one of the preceding claims, wherein the bushing has sizing capability of at least 3%, wherein the sizing capability is the amount of plastic deformation the laminate of the bushing can undergo expressed in the percentage decrease of wall thickness after a bushing has been deformed by an oversized pin.

12. A method of preparing a bushing according to claim 1, the method comprising:

providing a metal wire or a metal sheet, each comprising iron;
applying a metal-containing composition onto the metal wire or metal sheet to form a metal precursor;
forming a mesh or an expanded sheet from the metal precursor so that a porous metallic layer is formed, wherein the porous metallic layer has a porosity of at least 1% and not greater than 99%;
applying a sliding layer onto the mesh or expanded sheet to form a stack;
calendaring the stack to form a laminate;
cutting a blank from the laminate; and
forming a semi-finished bushing from the blank, wherein the metal-containing composition comprises a metal having an electronegativity less than iron.

**Patentansprüche**

1. Buchse, umfassend:
eine poröse Metallschicht, wobei die poröse Metallschicht durch eine erste Zusammensetzung und eine zweite Zusammensetzung gebildet ist, wobei die erste Zusammensetzung Eisen umfasst, die zweite Zusammensetzung ein Metall umfasst, das eine geringere Elektronegativität als Eisen aufweist, und eine Gleitschicht, die über der porösen Metallschicht liegt, wobei die poröse Metallschicht eine Porosität von mindestens 1 % und nicht mehr als 99 % aufweist und wobei das poröse Metall aus einem Maschenmaterial, einem Gitter, einer expandierten Folie oder einer perforierten Folie ausgewählt ist.

2. Scharnierbaugruppe, umfassend:

einen ersten Scharnierabschnitt und einen zweiten Scharnierabschnitt;
einen Stift, der den ersten Scharnierabschnitt mit dem zweiten Scharnierabschnitt verbindet; und
eine Buchse nach Anspruch 1.

3. Buchse oder Scharnierbaugruppe nach einem der Ansprüche 1 und 2, wobei die erste Zusammensetzung Stahl beinhaltet.

4. Buchse oder Scharnierbaugruppe nach einem der Ansprüche 1 und 2, wobei die zweite Zusammensetzung Aluminium, Magnesium, Zink oder eine Legierung davon beinhaltet.

5. Buchse oder Scharnierbaugruppe nach einem der Ansprüche 1 und 2, wobei die zweite Zusammensetzung nicht mehr als 10 Gew.-% der porösen Metallschicht ausmacht.

6. Buchse oder Scharnierbaugruppe nach einem der vorhergehenden Ansprüche, wobei die Gleitschicht ein Fluorpolymer umfasst.

7. Buchse oder Scharnierbaugruppe nach einem der Ansprüche 1 bis 5, wobei die Gleitschicht ein Polytetrafluorethylen (PTFE), ein Polyamid (PA), ein Polyetheretherketon (PEEK), ein Polyimid (PI), ein Polyamideimid (PAI) umfasst, ein Polyphenylensulfid (PPS), ein Polyphenylensulfon (PPSO2), ein Flüssigkristallpolymer (LCP), Perfluoralkoxypolymer (PFA), Polyoxymethylen (POM), Polyethylen (PE), UHMWPE oder eine Mischung davon umfasst.

8. Buchse oder Scharnierbaugruppe nach einem der vorhergehenden Ansprüche, wobei die Gleitschicht eine Dicke von mindestens ca. 0,05 mm aufweist.

9. Buchse oder Scharnierbaugruppe nach einem der vorhergehenden Ansprüche, wobei die Gleitschicht eine Dicke von nicht mehr als ca. 5 mm aufweist.

10. Buchse oder Scharnierbaugruppe nach einem der vorhergehenden Ansprüche, wobei die poröse Metallschicht in die Gleitschicht eingebettet ist.

11. Buchse oder Scharnierbaugruppe nach einem der vorhergehenden Ansprüche, wobei die Buchse eine Aufweitungsfähigkeit von mindestens 3 % aufweist, wobei die Aufweitungsfähigkeit das Ausmaß der plastischen Verformung ist, die am Laminat der Buchse auftreten kann, ausgedrückt in der prozentualen Abnahme der Wanddicke, nachdem eine Buchse durch einen übergroßen Stift verformt wurde.

12. Verfahren zum Herstellen einer Buchse nach Anspruch 1, wobei das Verfahren umfasst: Bereitstellen eines Metalldrahts oder eines Metallblechs, die jeweils Eisen umfassen;
Aufbringen einer metallhaltigen Zusammensetzung auf den Metalldraht oder das Metallblech, um einen Metallvorläufer zu bilden;
Bilden eines Netzes oder einer expandierten Folie aus dem Metallvorläufer, sodass eine poröse Metallschicht gebildet wird, wobei die poröse Metallschicht eine Porosität von mindestens 1 % und nicht mehr als 99 % aufweist;
Aufbringen einer Gleitschicht auf das Netz oder die expandierte Folie, um einen Stapel zu bilden;
Kalandrieren des Stapels, um ein Laminat zu bilden;
Schneiden eines Rohlings aus dem Laminat; und
Bilden einer halbfertigen Buchse aus dem Rohling, wobei die metallhaltige Zusammensetzung ein Metall umfasst, das eine geringere Elektronegativität als Eisen aufweist.

**Revendications**

1. Douille comprenant :
une couche métallique poreuse, la couche métallique poreuse étant formée par une première composition et une seconde composition, la première composition comprenant du fer, la seconde composition comprenant un métal ayant une électronégativité inférieure à celle du fer, et une couche coulissante recouvrant la couche métallique poreuse, dans laquelle la couche métallique poreuse a une porosité d'au moins 1 % et non supérieure à 99 %, et dans laquelle la couche métallique poreuse est choisie parmi un matériau à mailles, une grille, une feuille expansée ou une feuille perforée.

2. Ensemble charnière comprenant :

une première partie charnière et une seconde partie charnière ;
une broche reliant la première partie charnière à la seconde partie charnière ; et
une douille selon la revendication 1.

3. Douille ou ensemble charnière selon l'une quelconque des revendications 1 et 2, dans laquelle ou dans lequel la première composition comprend de l'acier.

4. Douille ou ensemble charnière selon l'une quelconque des revendications 1 et 2, dans laquelle ou dans lequel la seconde composition comprend de l'aluminium, du magnésium, du zinc ou un alliage de ceux-ci.

5. Douille ou ensemble charnière selon l'une quelconque des revendications 1 et 2, dans laquelle ou dans lequel la seconde composition ne dépasse pas 10 % en poids de la couche métallique poreuse.

6. Douille ou ensemble charnière selon l'une quelconque des revendications précédentes, dans laquelle ou dans lequel la couche coulissante comprend un polymère fluoré.

7. Douille ou ensemble charnière selon l'une quelconque des revendications 1 à 5, dans laquelle ou dans lequel la couche coulissante comprend un polytétrafluoroéthylène (PTFE), un polyamide (PA), une polyétheréthercétone (PEEK), un polyimide (PI), un polyamideimide (PAI ), un poly(sulfure de phénylène) (PPS), une polyphénylènesulfone (PPSO2), un polymère à cristaux liquides (LCP), un perfluoroalcoxypolymère (PFA), un polyoxyméthylène (POM), un polyéthylène (PE), UHMWPE ou un mélange de ceux-ci.

8. Ensemble de douille ou charnière selon l'une quelconque des revendications précédentes, dans laquelle ou dans lequel la couche coulissante a une épaisseur d'au moins environ 0,05 mm.

9. Douille ou ensemble charnière selon l'une quelconque des revendications précédentes, dans laquelle ou dans lequel la couche coulissante a une épaisseur non supérieure à environ 5 mm.

10. Douille ou ensemble charnière selon l'une quelconque des revendications précédentes, dans laquelle ou dans lequel la couche métallique poreuse est incorporée dans la couche coulissante.

11. Douille ou ensemble charnière selon l'une quelconque des revendications précédentes, dans laquelle ou dans lequel la douille a une capacité de dimensionnement d'au moins 3 %, dans laquelle ou dans lequel la capacité de dimensionnement est la quantité de déformation plastique que le stratifié de la douille peut subir, exprimée en pourcentage de diminution de l'épaisseur de la paroi après la déformation d'une douille par une broche surdimensionnée.

12. Procédé de préparation d'une douille selon la revendication 1, le procédé comprenant : la fourniture d'un fil métallique ou d'une feuille métallique, chacun comprenant du fer ;
l'application d'une composition contenant un métal sur le fil métallique ou la feuille métallique pour former un précurseur métallique ;
la formation d'un maillage ou d'une feuille expansée à partir du précurseur métallique de sorte à former une couche métallique poreuse, dans laquelle la couche métallique poreuse a une porosité d'au moins 1 % et non supérieure à 99%;
l'application d'une couche coulissante sur le maillage ou la feuille expansée pour former une pile ;
le calandrage de la pile pour former un stratifié ;
la découpe d'une ébauche à partir du stratifié ; et
la formation d'une douille semi-finie à partir de l'ébauche, dans laquelle la composition contenant un métal comprend un métal ayant une électronégativité inférieure à celle du fer.

FIG. 1A

FIG. 1B

FIG. 1C

FIG. 1D

204

206

202

FIG. 2B

*FIG. 2A*

108
106
104
102
104

*FIG. 2B*

108
1046
102
1048

*FIG. 3A*

108
1046
102
105
1048

*FIG. 3B*

FIG. 4

500

504
502

*FIG. 5*

602
50

504
500
502

*FIG. 6*

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011049834 A